# EUROPEAN PATENT APPLICATION

(11) **EP 1 931 053 A2**
(43) Date of publication of application: **11.06.2008**
(21) Application number: 07013826.8
(22) Date of filing: 13.07.2007
(51) Int. Cl.: H04B 1/40

(54) **Method and system for shared high-power transmit path for a multi-protocol transceiver**

(30) Priority: 06.12.2006 US 868818 P; 31.12.2006 US 618848
(71) Applicant: Broadcom Corporation, Irvine, CA 92617 (US)
(72) Inventor: Marholev, Bojko, 92606 Irvine CA (US); Pan, Meng-An, 92606 Irvine CA (US); Anand, Seema, 90275 Rancho Palos Verdes (CA); Behzad, Arya, 92064 Poway, CA (US)
(74) Representative: Jehle, Volker Armin

(57) **Abstract**

Aspects of a method and system for a shared high-power transmit path for a multi-protocol transceiver are disclosed. Aspects of one method may include sharing a first power amplifier with a WLAN signal and a Bluetooth signal. The first power amplifier may amplify the WLAN signal and/or the Bluetooth signal simultaneously, or individually. A second power amplifier may be used to amplify the Bluetooth signal, where the first power amplifier may have a higher gain than the second power amplifier. Power may be reduced to the second power amplifier in instances where the first power amplifier is used to amplify the Bluetooth signal. The Bluetooth signal may be communicated to the first power amplifier via a switching circuit, which may comprise one or more switching stages.

## Description

### CROSS-REFERENCE TO RELATED APPLICATIONS/INCORPORATION BY REFERENCE

This application makes reference to, claims priority to, and claims the benefit of United States Provisional Application Serial No. 60/868,818, filed on December 6, 2006.

The above stated application is hereby incorporated herein by reference in its entirety.

### FIELD OF THE INVENTION

Certain embodiments of the invention relate to wireless systems. More specifically, certain embodiments of the invention relate to a method and system for a shared high-power transmit path for a multi-protocol transceiver.

### BACKGROUND OF THE INVENTION

As mobile, wireless, and/or handheld portable devices increasingly become multifunctional, "all-in-one," communication devices, these handheld portable devices integrate an increasingly wide range of functions for handling a plurality of wireless communication services. For example, a single handheld portable device may enable Bluetooth communications and wireless local area network (WLAN) communications.

Much of the front end processing for wireless communications services is performed in analog circuitry. Front end processing within a portable device may comprise a range of operations that involve the reception of radio frequency (RF) signals, typically received via an antenna that is communicatively coupled to the portable device. Receiver tasks performed on an RF signal may include demodulation, filtering, and analog to digital conversion (ADC), for example. The resulting signal may be referred to as a baseband signal. The baseband signal typically contains digital data, which may be subsequently processed in digital circuitry within the portable device.

Front end processing within a portable device may also include transmission of RF signals. Transmitter tasks performed on a baseband signal may include digital to analog conversion (DAC), filtering, modulation, and power amplification (PA), for example. The power amplified, RF signal, is typically transmitted via an antenna that is communicatively coupled to the portable device by some means. The antenna utilized for receiving an RF signal at a portable device may or may not be the same antenna that is utilized for transmitting an RF signal from the portable device.

One limitation in the inexorable march toward increasing integration of wireless communications services in a single portable device is that the analog RF circuitry for each separate wireless communication service may be implemented in a separate integrated circuit (IC) device (or chip). This may result in a number of disadvantages and/or limitations in such portable devices. For example, the increasing chip count may limit the extent to which the physical dimensions of the portable device may be miniaturized. Thus, the increasing integration may result in physically bulky devices, which may be less appealing to consumer preferences. The chip count may be further increased due to the need to replicate ancillary circuitry associated with each RF IC. For example, each RF IC may require separate low noise amplifier (LNA) circuitry, separate PA circuitry, and separate crystal oscillator (XO) circuitry for generation of clocking and timing signals within each RF IC. Similar replication may occur for digital IC devices utilized for processing of baseband signals from each separate Wireless communication service.

Along with an increasing IC component count, there may also be a corresponding rise in power consumption within the portable device. This may present another set of disadvantages, such as increased operating temperature, and reduced battery life between recharges.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and system for a shared high-power transmit path for a multi-protocol transceiver, substantially as shown in and/or described in connection with at least one of the figures, as set forth more completely in the claims.
According to an aspect of the invention, a method for processing signals is provided, the method comprising: sharing a first amplifier by a first wireless signal modulated for a first wireless protocol and a second wireless signal modulated for a second wireless protocol.
Advantageously; said first wireless protocol is IEEE 802.11x protocol.
Advantageously, said second wireless protocol is Bluetooth protocol.
Advantageously, the method further comprises amplifying by said first amplifier, one or both of said first wireless signal and said second wireless signal.
Advantageously, the method further comprises simultaneously amplifying by said first amplifier, both of said first wireless signal and said second wireless signal.
Advantageously, the method further comprises amplifying said second wireless signal with a second amplifier.
Advantageously, said first amplifier provides higher gain than said second amplifier.
Advantageously, the method further comprises reducing power to said second amplifier when said first amplifier is amplifying said second wireless signal.
Advantageously, the method further comprises communicating said second wireless signal to said first amplifier via a switching circuit.
Advantageously, said switching circuit comprise a two-stage switching circuit.
According to an aspect of the invention, a machine-readable storage is provided having stored thereon, a computer program having at least one code section for processing signals, the at least one code section being executable by a machine for causing the machine to perform steps comprising: sharing a first amplifier by a first wireless signal modulated for a first wireless protocol and a second wireless signal modulated for a second wireless protocol.
Advantageously, said first wireless protocol is IEEE 802.11x protocol.
Advantageously, said second wireless protocol is Bluetooth protocol.
Advantageously, the at least one code section comprises code for enabling amplification of said first wireless signal and said second wireless signal by said first amplifier.
Advantageously, the at least one code section comprises code for enabling simultaneous amplification of said first wireless signal and said second wireless signal with said first amplifier.
Advantageously, the at least one code section comprises code that enables amplification of said second wireless signal with a second amplifier.
Advantageously, said first amplifier provides higher gain than said second amplifier.
Advantageously, the at least one code section comprises code for enabling reduction of power to said second amplifier when said first amplifier is amplifying said second wireless signal.
Advantageously, the at least one code section comprises code for enabling communication of said second wireless signal to said first amplifier via a switching circuit.
Advantageously, said switching circuit comprises a two-stage switching circuit.
According to an aspect of the invention, a system is provided for processing signals, the system comprising: a first amplifier that enables amplification of a first wireless signal modulated for a first wireless protocol and a second wireless signal modulated for a second wireless protocol.
Advantageously, said first wireless protocol is IEEE 802.11x protocol.
Advantageously, said second wireless protocol is Bluetooth protocol.
Advantageously, said first amplifier enables amplification of one or both of said first wireless signal and said second wireless signal.
Advantageously, said first amplifier enables simultaneous amplification of both of said first wireless signal and said second wireless signal.
Advantageously, the system further comprises a second amplifier enables amplification of said second wireless signal.
Advantageously, said first amplifier provides a higher gain than said second amplifier.
Advantageously, the system further comprises one or more circuits that enables reduction of power to said second amplifier when said first amplifier is amplifying said second wireless signal.
Advantageously, the system further comprises a switching circuit that enables communication of said second wireless signal to said first amplifier.
Advantageously, said switching circuit comprises a two stage switching circuit.
According to an aspect of the invention, a method is provided for processing signals, the method comprising: sharing at least one power amplifier in a transmit chain of a transmitter by a plurality of transmit signals for a corresponding plurality of wireless protocols.
Advantageously, a first of said plurality of wireless protocols comprises an IEEE 802.11 x protocol.
Advantageously, a second of said plurality of wireless protocol comprises Bluetooth protocol.
Advantageously, the method further comprises amplifying by said at least one power amplifier, one or more of said plurality of transmit signals.
Advantageously, the method further comprises simultaneously amplifying by said at least one power amplifier, two or more of said plurality of transmit signals.
Advantageously, the method further comprises controlling said at least one power amplifier in said transmit chain to operate at optimal efficiency.
Advantageously, the method further comprises controlling said at least one power amplifier in said transmit chain to operate at maximum power efficiency.
Advantageously, the method further comprises controlling a bias current of said at least one power amplifier in said transmit chain for said optimal operation.
Advantageously, the method further comprises controlling a gain of said at least one power amplifier in said transmit for said optimal operation.
Advantageously, the method further comprises controlling a linearity of said at least one power amplifier in said transmit for said optimal operation.
According to an aspect of the invention, a system is provided for processing signals, the method comprising: sharing at least one power amplifier in a transmit chain of a transmitter by a plurality of transmit signals for a corresponding plurality of wireless protocols.
Advantageously, a first of said plurality of wireless protocols comprises an IEEE 802.11 x protocol.
Advantageously, a second of said plurality of wireless protocol comprises Bluetooth protocol.
Advantageously, said at least one power amplifier amplifies one or more of said plurality of transmit signals.
Advantageously, said least one power amplifier simultaneously amplifies two or more of said plurality of transmit signals.
Advantageously, said at least one power amplifier in said transmit chain is controlled so as to operate at optimal efficiency.
Advantageously, said at least one power amplifier in said transmit chain is controlled so as to operate at maximum power efficiency.
Advantageously, a bias current of said at least one power amplifier in said transmit chain is controlled so that said at least one power amplifier provides said optimal operation.
Advantageously, a gain of said at least one power amplifier in said transmit chain is controlled so that said at least one power amplifier provides said optimal operation.
Advantageously, a linearity of said at least one power amplifier in said transmit chain is controlled so that said at least one power amplifier provides said optimal operation.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary wireless terminal, in accordance with an embodiment of the invention.

FIG. 2A is an exemplary block diagram illustrating sharing a power amplifier in multi-antenna system, in accordance with an embodiment of the invention.

FIG. 2B is an exemplary block diagram illustrating sharing a power amplifier in a single antenna system, in accordance with an embodiment of the invention.

FIG. 2C is an exemplary block diagram illustrating combining of differential signals from two mixers, in accordance with an embodiment of the invention.

FIG. 3 is a block diagram illustrating an exemplary RF switching circuit used for sharing a power amplifier, in accordance with an embodiment of the invention.

FIG. 4 is an exemplary flow diagram for sharing a high-power transmit path for a multi-protocol transceiver, in accordance with an embodiment of the invention.

FIG. 5 is an exemplary flow diagram for sharing a high-power transmit path for a multi-protocol transceiver, in accordance with an embodiment of the invention.

### DETAILED DESCRIPTION OF THE INVENTION

Certain embodiments of the invention may be found in a method and system for a shared high-power transmit path for a multi-protocol transceiver. Various embodiments of the invention may comprise sharing a first power amplifier with a first wireless signal and a second wireless signal. The first wireless signal may be modulated with IEEE 802.11x protocol, and the second wireless signal may be modulated with Bluetooth protocol. The first power amplifier may amplify the first wireless signal and/or the second wireless signal, where the first power amplifier may amplify the first wireless signal and the second wireless signal simultaneously.

A second power amplifier may be used to amplify the second wireless signal, where the first power amplifier may have a higher gain than the second power amplifier. Power may be reduced to the second power amplifier if the first power amplifier may be used to amplify the second wireless signal. The second wireless signal may be communicated to the first power amplifier via a switching circuit, which may comprise at least one or more switching stages (current mode switching, voltage mode switching, etc.).

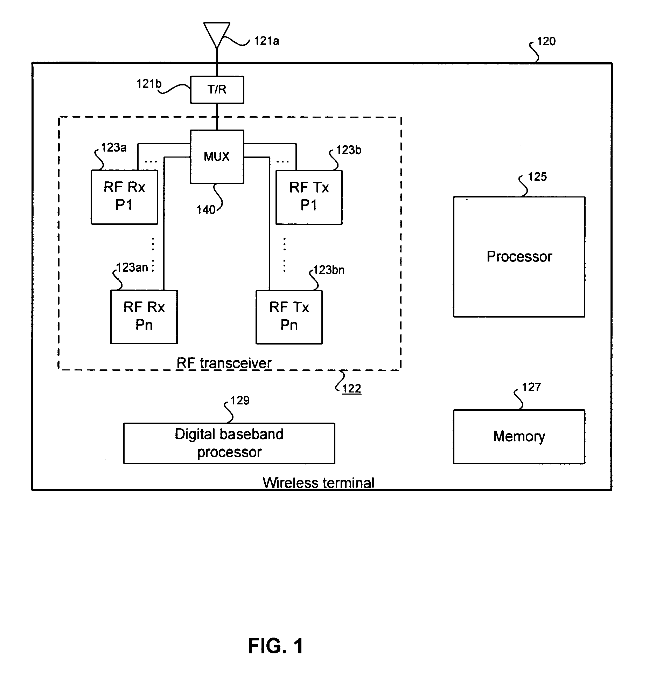

FIG. 1 is a block diagram illustrating an exemplary wireless terminal, in accordance with an embodiment of the invention. Referring to FIG. 1, there is shown a wireless terminal 120 that may comprise a plurality of RF receivers 123an, ..., 123n and a plurality of RF transmitters 123b, ..., 123bn a digital baseband processor 129, a processor 125, and a memory 127. In various embodiments of the invention, the RF receivers 123a, ... 123an and the RF transmitters 123b, ..., 123bn may be integrated within an RF transceiver 122, for example. A single transmit and receive antenna 121a may be communicatively coupled to a transmit/receive switch 121 b, the latter of which may be communicatively coupled to a MUX or switch 140. The MUX or swich 140 may be communicatively coupled to each of the RF receivers 123a, ..., 123an and the RF transmitters 123b, ..., 123bn. A transmit/receive switch 121b, or other device having switching capabilities, may be coupled between the RF receivers 123a, ..., 123an and the RF transmitters 123b, ... 123bn, and may be utilized to switch the antenna between transmit and receive functions. The wireless terminal 120 may be operated in a system, such as the Wireless Local Area Network (WLAN), a cellular network and/or digital video broadcast network, for example. In this regard, the wireless terminal 120 may support a plurality of wireless communication protocols, including the IEEE 802.11 n standard specifications for WLAN networks.

One or more of the RF receivers 123a, .., 123an may comprise suitable logic, circuitry, and/or code that may enable processing of received RF signals. One or more of the RF receivers 123a, .., 123an, may enable receiving RF signals for a first protocol in one or a plurality of frequency bands in accordance with the wireless communications protocols that may be supported by the wireless terminal 120. The RF receiver 123an, for example, may enable receiving RF signals for a second or n^{th} protocol in one or a plurality of frequency bands in accordance with the wireless communications protocols that may be supported by the wireless terminal 120. Each frequency band supported by any portion of the RF receivers 123a, ..., 123an may have a corresponding front-end circuit for handling low noise amplification and down conversion operations, for example. In this regard, the RF receiver 123a or the RF receiver 123an may be referred to as a multi-band receiver when it supports more than one frequency band. In an exemplary embodiment of the invention, RF receiver 123a may handle a first wireless protocol, ..., and RF receiver 123an may handle an n^{th} wireless protocol, where n may be greater than or equal to 2.

In another embodiment of the invention, one or more of the RF receivers 123a, ... 123 an may be a single-band or a multi-band receiver. The RF receiver 123a may be implemented on a chip. In an embodiment of the invention, one or more of the RF receivers 123a, ... 123an may be integrated on a chip to comprise, for example, the RF transceiver 122, for example. In another embodiment of the invention, any one or more of the RF receivers 123a, ..., 123an may be integrated on a chip with more than one component in the wireless terminal 120.

In one embodiment of the invention, the RF receiver 123a, for example, may quadrature down convert the received RF signal to a baseband frequency signal that comprises an in-phase (I) component and a quadrature (Q) component. It should be recognized that other types of receivers may be utilized without departing from other embodiments of the invention. The RF receiver 123a may perform direct down conversion of the received RF signal to a baseband frequency signal, for example. In some instances, the RF receiver 123a may enable analog-to-digital conversion of the baseband signal components before transferring the components to the digital baseband processor 129. In other instances, the RF receiver 123a may transfer the baseband signal components in analog form. The same may be true for any one or more of the other receivers.

The digital baseband processor 129 may comprise suitable logic, circuitry, and/or code that may enable processing and/or handling of baseband frequency signals. In this regard, the digital baseband processor 129 may process or handle signals received from one or more of the RF receivers 123a, ..., 123an and/or signals to be transferred to one or more of the RF transmitters 123b, ..., 123bn, when one or more of the RF transmitters 123b,..., 123bn is present, for transmission to the network. The digital baseband processor 129 may also provide control and/or feedback information to one or more of the RF receivers 123a, ..., 123an and to one or more of the RF transmitters 123b, ..., 123bn based on information from the processed signals. The digital baseband processor 129 may communicate information and/or data from the processed signals to the processor 125 and/or to the memory 127. Moreover, the digital baseband processor 129 may receive information from the processor 125 and/or to the memory 127, which may be processed and transferred to the RF transmitter 123b, ..., 123bn for transmission to the network. In an embodiment of the invention, the digital baseband processor 129 may be integrated on a chip with more than one component in the wireless terminal 120.

One or more of the RF transmitters 123b, ..., 123bn may comprise suitable logic, circuitry, and/or code that may enable processing of RF signals for transmission. One or more of the RF transmitters 123b, ..., 123bn may enable transmission of RF signals in a plurality of frequency bands. Each frequency band supported by one or more of the RF transmitters 123b, ..., 123bn may have a corresponding front-end circuit for handling amplification and up conversion operations, for example. In this regard, one or more of the RF transmitters 123b may be referred to as a multi-band transmitter when it supports more than one frequency band. In another embodiment of the invention, one or more of the RF transmitters 123b,..., 123bn may be a single-band or a multi-band transmitter. One or more of the RF transmitters 123b, ..., 123bn may be implemented on a chip. In one embodiment of the invention, one or more of the RF transmitters 123b, ..., 123bn may be integrated on a chip to comprise the RF transceiver 122, for example. In another embodiment of the invention, one or more of the RF transmitters 123b, ..., 123bn may be integrated on a chip with more than one component in the wireless terminal 120. In an exemplary embodiment of the invention, RF transmitter 123b may handle a first wireless protocol, ..., and RF receiver 123bn may handle an n^{th} wireless protocol, where n may be greater than or equal to 2.

In one embodiment of the invention the RF transmitter 123b, for example, may quadrature up convert the baseband frequency signal comprising I/Q components to an RF signal. The RF transmitter 123b may perform direct up conversion of the baseband frequency signal to a baseband frequency signal, for example. In some instances, the RF transmitter 123b may enable digital-to-analog conversion of the baseband signal components received from the digital baseband processor 129 before up conversion. In other instances; the RF transmitter 123b may receive baseband signal components in analog form. Notwithstanding, the invention may not be so limited to this type of transmitter configuration. Accordingly, other types of transmitters such as a polar transmitter may be utilized.

The processor 125 may comprise suitable logic, circuitry, and/or code that may enable control and/or data processing operations for the wireless terminal 120. The processor 125 may be utilized to control at least a portion of one or more of the RF receivers 123a, ..., 123an, one or more of the RF transmitters 123b, ..., 123bn, the digital baseband processor 129, and/or the memory 127. In this regard, the processor 125 may generate at least one signal for controlling operations within the wireless terminal 120. The processor 125 may also enable executing of applications that may be utilized by the wireless terminal 120. For example, the processor 125 may generate at least one control signal and/or may execute applications that may enable current and proposed WLAN communications in the wireless terminal 120.

The memory 127 may comprise suitable logic, circuitry, and/or code that may enable storage of data and/or other information utilized by the wireless terminal 120. For example, the memory 127 may be utilized for storing processed data generated by the digital baseband processor 129 and/or the processor 125. The memory 127 may also be utilized to store information, such as configuration information, that may be utilized to control the operation of at least one block in the wireless terminal 120. For example, the memory 127 may comprise information necessary to configure the RF receiver 123a for receiving WLAN signals in the appropriate frequency band.

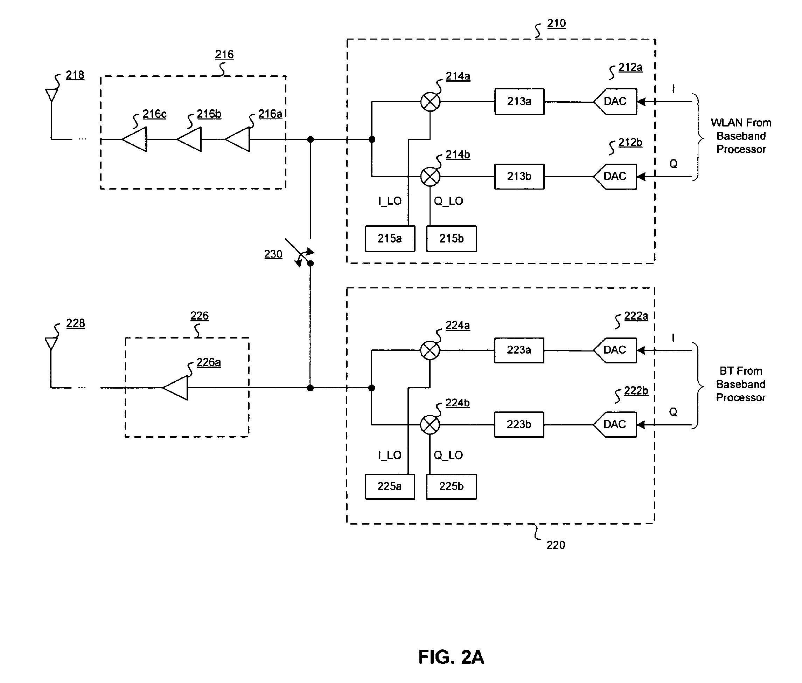

FIG. 2A is an exemplary block diagram illustrating sharing a power amplifier multi-antenna system, in accordance with an embodiment of the invention. Referring to FIG. 2A, there is shown transmission paths for signals for two wireless protocols, such as, for example, WiFi WLAN and Bluetooth. While various embodiments of the invention may be used for different protocols, the WLAN and Bluetooth protocol usage may be described for ease of explanation. The transmission paths may comprise processing blocks 210 and 220, amplifiers 216 and 226, antennas 218 and 228, and an RF switching circuit 230.

The processing block 210 may comprise, for example, digital-to-analog converters (DACs) 212a and 212b; low pass filters (LPFs) 213a and 213b, mixers 214a and 214b, and local oscillators 215a and 215b. The DAC 212a may convert in-phase digital input signal I to differential analog signals, and the DAC 212b may convert quadrature digital input signal Q to differential analog signals. Accordingly, the LPFs 213a and 213b, and the mixers 214a and 214b may have differential input signals and differential output signals. The differential output signals of the mixer 214a may be combined with the differential output signals of the mixer 214b to form single differential output signals WLAN+ and WLAN- appropriate for WiFi transmission. It should be recognized that the processing block 210 is not limited to the arrangement shown. Accordingly, the processing block 210 may utilize any type of modulation. For example, the processing block 210 may comprise a polar or other type of transmitter circuit.

The amplifier 216 may comprise, for example, a programmable gain amplifier (PGA) 216a, a power amplifier driver 216b, and a power amplifier 216c. The PGA 216a may provide a gain to the differential input signals WLAN+ and WLAN-. The gain of the PGA 216a may be controlled by circuitry and/or a processor, such as, for example, the RF transceiver 122, the processor 125, and/or the baseband processor 129. The PAD 216b may provide further gain, and the PA 216c may add more gain for transmission via the antenna 218. The differential output of the PA 216c may be converted to a single output via, for example, a balun (not shown) for transmission.

The processing block 220 may comprise DACs 222a and 222b, low pass filters (LPFs) 223a and 223b, mixers 224a and 224b, and local oscillators 225a and 225b. The DAC 222a may convert in-phase digital input signal I to differential analog signals, and the DAC 222b may convert quadrature digital input signal Q to differential analog signals. Accordingly, the LPFs 223a and 223b, and the mixers 224a and 224b may have differential input signals and differential output signals. The differential output signals of the mixer 224a may be combined with the differential output signals of the mixer 224b to form single differential output signals BT+ and BT-. It should be recognized that the processing block 220 is not limited to the arrangement shown. Accordingly, the processing block 220 may utilize any type of modulation. For example, the processing block 220 may comprise a polar or other type of transmitter circuit.

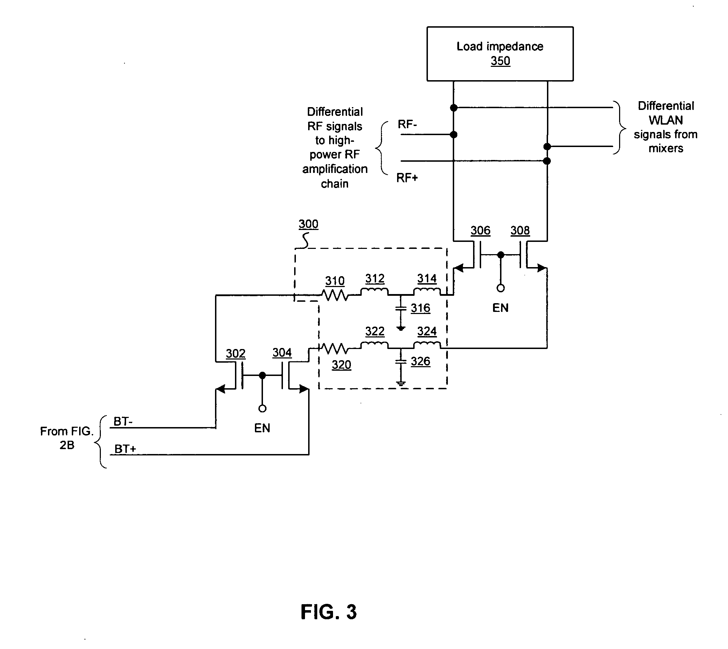

The amplifier 226 may comprise, for example, a power amplifier 226a. A single stage amplification is shown with the amplifier 226a to indicate that the amplifier 226 may have a lower gain than the amplifier block 216. However, the amplifier 226 may have multiple amplifier stages. The PA 226a may provide a gain to the differential input signals BT+ and BT-, which are subsequently illustrated in FIG. 3. The gain of the PA 226a may be fixed or variable, where a gain of the PA 226a may be variably controlled by, for example, the processor 125 or the baseband processor 129. The differential output of the PA 226a may be converted to a single output via, for example, a balun (not shown) for transmission by the antenna 228.

The RF switching circuit 230 may comprise suitable logic and/or circuitry that may allow communication of the Bluetooth differential signals BT+ and BT- to the amplifier 216. Accordingly, the amplifier 216 may amplify the WLAN differential signals WLAN+ and WLAN-, the Bluetooth differential signals BT+ and BT-, or both the WLAN differential signals WLAN+ and WLAN- and the Bluetooth differential signals BT+ and BT-. The RF switching circuit 230 may comprise one or more number of switching stages. The switching circuit is discussed in more detail with respect to FIG. 3.

In some instances, depending on whether either or both of the wireless protocols is being transmitted via the amplifier 216, the characteristics of the PGA 216a, the power amplifier driver 216b, and/or the power amplifier 216c may be adjusted or controlled to optimize the operation of the amplifier 216. In this regard, the characteristics may refer to, for example, biasing current values, linearity, and/or gain. Moreover, optimization may refer to achieving a maximum power efficiency, for example.

In operation, the amplifier 216 may amplify WLAN signals from the processing block 210 and the amplifier 226 may amplify Bluetooth signals from the processing block 220. The total gain of the amplifier 216 may be larger than the total gain of the amplifier 226 since WLAN signals, for example, may need higher gain for transmission than Bluetooth signals. However, on occasion, Bluetooth signals may be transmitted in Class 1 mode, where the transmitted signal strength level may be higher. Since the amplifier 226 may not be able to transmit signals at Class 1 levels, for example 20 dBm, the Bluetooth signals may be communicated to the amplifier 216.

In an exemplary embodiment of the invention, the Bluetooth signals may be isolated from the amplifier 216 when the RF switching circuit 230 is open. However, the RF switching circuit 230 may be closed to enable the Bluetooth signals from the processor block 220 to be communicated to the amplifier 216. An exemplary RF switching circuit is described with respect to FIG. 3. When the Bluetooth signals are to be amplified by the amplifier 216, the amplifier 226 may not be needed, and, hence, the power supplied to the amplifier 226 may be reduced. In an embodiment of the invention, the voltage or current supplied to the amplifier 216 and/or amplifier 226 may be reduced or completely shutoff when an amplifier is not in use.

The amplifier 216 may amplify the Bluetooth signals and the WLAN signals at the same time if the Bluetooth signals being transmitted have a frequency bandwidth that is within the bandwidth of the amplifier 216, and if the Bluetooth signal frequencies do not overlap with the WLAN signal frequencies. Furthermore, various embodiments of the invention may reduce the amount of power supplied to one or both of the processing blocks 210 and/or 220 if the processing block is not in use. For example, if the WLAN signals are not to be transmitted, power may be reduced to the processing block 210. In another embodiment of the invention, when more than two protocols are supported, each of the protocols may utilize a corresponding processing block substantially similar to the processing blocks 210 and 220, for example. In this regard, each of the supported protocols need not have their own RF section, such as the amplifier 226, for example, but instead may utilize, simultaneously or individually, a high power path for a shared transmission path operation.

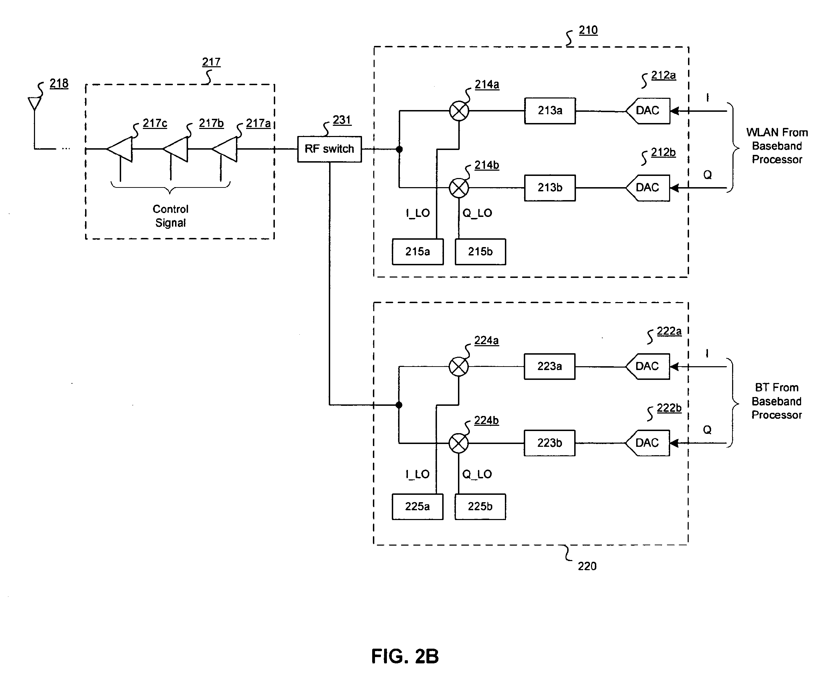

FIG. 2B is an exemplary block diagram illustrating sharing a power amplifier multi-antenna system, in accordance with an embodiment of the invention. Referring to FIG. 2B, there is shown transmission paths for signals for two wireless protocols, such as, for example, WiFi WLAN and Bluetooth. While various embodiments of the invention may be used for different protocols, the WLAN and Bluetooth protocol usage may be described for ease of explanation. The transmission paths may comprise processing blocks 210 and 220, amplifier 217, antenna 218, and an RF switch 231.

The transmission paths disclosed in FIG. 2B differ from those disclosed in FIG. 2A in that a single antenna may be utilized for transmission. In this regard, the transmission paths disclosed in FIG. 2B need not utilize the antenna 228, the amplifier 226, nor the RF switching circuit 230 and may utilize the amplifier 217 instead of the amplifier 216.

The amplifier 217 may comprise, for example, a programmable gain amplifier (PGA) 217a, a power amplifier driver (PAD) 217b, and a power amplifier (PA) 217c. The PGA 217a may provide a gain to the differential input signals WLAN+ and WLAN- or to the Bluetooth differential signals BT+ and BT-,. The gain of the PGA 217a may be controlled by circuitry and/or a processor, such as, for example, the RF transceiver 122, the processor 125, and/or the baseband processor 129. The PAD 217b may provide further gain, and the PA 217c may add more gain for transmission via the antenna 218. The differential output of the PA 217c may be converted to a single output via, for example, a balun (not shown) for transmission. The PGA 217a, the PAD 217b, and/or the PA 217c may be controlled by a plurality of control signals from circuitry and/or from a processor, such as, for example, the RF transceiver 122, the processor 125, and/or the baseband processor 129. In an exemplary embodiment of the invention, to provide a similar operation for Bluetooth signals as those provided by the PA 226a in the amplifier 226 disclosed in FIG. 2A, the control signals may be utilized to configure the PGA 217a and the PAD 217b to provide unity gain and the overall gain may be provided by the PA 217c.

The RF switch 231 may comprise suitable logic and/or circuitry that may allow communication of the Bluetooth differential signals BT+ and BT- from the processing block 220 and/or the WLAN differential signals WLAN+ and WLAN- from the processing block 210 to the amplifier 217. Accordingly, the amplifier 217 may amplify the WLAN differential signals WLAN+ and WLAN-, the Bluetooth differential signals BT+ and BT-, or both the WLAN differential signals WLAN+ and WLAN- and the Bluetooth differential signals BT+ and BT-. The RF switch 231 may comprise one or more number of switching stages.

In operation, the amplifier 217 may amplify WLAN signals from the processing block 210 and Bluetooth signals from the processing block 220. The total gain of the amplifier 217 may be controlled since WLAN signals, for example, may need higher gain for transmission than Bluetooth signals. However, on occasion, Bluetooth signals may be transmitted in Class 1 mode, where the transmitted signal strength level may be higher.

The amplifier 217 may amplify the Bluetooth signals and the WLAN signals at the same time if the Bluetooth signals being transmitted have a frequency bandwidth that is within the bandwidth of the amplifier 217, and if the Bluetooth signal frequencies do not overlap with the WLAN signal frequencies. Furthermore, various embodiments of the invention may reduce the amount of power supplied to one or both of the processing blocks 210 and/or 220 if the processing block is not in use. For example, if the WLAN signals are not to be transmitted, power may be reduced to the processing block 210.

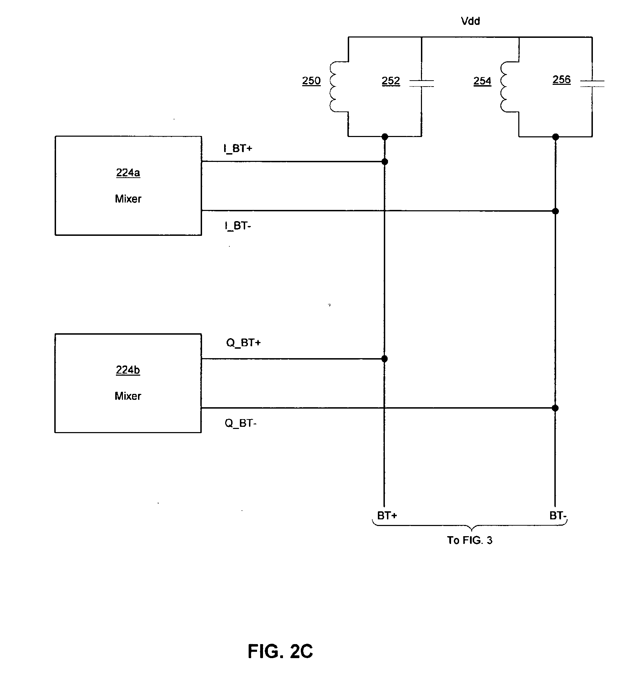

FIG. 2C is an exemplary block diagram illustrating combining of differential signals from two mixers, in accordance with an embodiment of the invention. Referring to FIG. 2C, there is shown the mixers 224a and 224b, inductors 250 and 254, and capacitors 252 and 256. The mixer 224a may output a first differential signal I_BT+ and a second differential signal I_BT-, where the differential signals I_BT+ and I_BT- may be representative of the I channel. The mixer 224b may output a first differential signal Q_BT+ and a second differential signal Q_BT-, where the differential signals Q_BT+ and Q_BT- may be for the Q channel.

The inductor 250 and the capacitor 252 may be representative of a load impedance for the differential signal I_BT+ of the mixer 224a and the differential signal Q_BT+ for the mixer 224b. Similarly, the inductor 254 and the capacitor 256 may be a load impedance for the differential signal I_BT- of the mixer 224a and the differential signal Q_BT- for the mixer 224b. Accordingly, signals from the differential signals of the mixers 224a and 224b may be combined together to form a single pair of differential signals BT+ and BT-. The differential signals output by the mixers 214a and 214b may be combined similarly to form a single pair of differential signals WLAN+ and WLAN-. The differential signals BT+ and BT- may be communicated to the amplifier 226 or the amplifier 216 prior to being transmitted by the antenna 228 or 218, respectively.

FIG. 3 is a block diagram illustrating an exemplary RF switching circuit used for sharing a power amplifier (amplifier), in accordance with an embodiment of the invention. Referring to FIG. 3, there is shown transistors 302, 304, 306, and 308, a parasitic impedance 300 primarily associated with trace routing, and a load impedance 350. The parasitic impedance 300 may be modeled by resistors 310 and 320, inductors 312, 314, 322, and 324, and capacitors 316 and 326. The parasitic impedance 300 may be a result of a path from the transistors 302 and 304 to the transistors 306 and 308. Accordingly, the load impedance 350 may increase as the path increases. The load impedance 350 may be load impedances to the mixers 214a and 214b, and may be similar to the load impedance described with respect to FIG. 2C with the inductors 250 and 254, and the capacitors 252 and 256.

An enable signal EN may be communicated to the gates of the transistors 302, 304, 306, and 308. The transistors 302 and 304 may comprise a first switch in, for example, the RF switching circuit 230, and the transistors 306 and 308 may comprise a second switch in the RF switching circuit 230. Two switching stages may be used for the RF switching circuit 230 in instances where a first processing block may be located remotely from a second processing block. Otherwise, a single switching stage may be used in the RF switching circuit 230. The number of switching stages used in the switching circuit 230 may be design dependent. Accordingly, the switching circuit 230 may comprise one or more switching circuits.

In operation, if the switching circuit 230 is to be opened, the enable signal EN may be deasserted, thereby turning off current flow through the transistors 302, 304, 306, and 308. Accordingly, the Bluetooth signals from the processing block 220 may be amplified by the amplifier 226, and the WLAN signals from the processing block 210 may be amplified by the amplifier 216. If the Bluetooth signals from the processing block 220 is to be amplified by the amplifier 216, then the enable signal EN may be asserted. The enable signal EN may be controlled by circuitry and/or a processor, such as, for example, the RF transceiver 122, the processor 125, and/or the digital baseband processor 129.

Since the impedance at the sources of the transistors 302 and 304 may be much less than the load impedances of the mixers 224a and 224b, where the load impedances were described with respect to FIG. 2C, most of the output currents for the mixers 224a and 224b may be steered to the transistors 302 and 304 rather than the load impedances. The parasitic impedance 300 may act as a low pass filter, with a portion of the higher frequencies being shunted to ground via the capacitors 316 and 326. The 3 dB point of the low pass filter may be at higher frequencies as the source impedance increases and the load impedance decreases.

The source impedance for the low pass filter formed by the parasitic impedance 300 may be the impedance of the drains for the transistors 302 and 304, which may be high. The load impedance for the low pass filter formed by the parasitic impedance 300 may be the impedance of the sources for the transistors 306 and 308, which may be low. Accordingly, the low pass filter formed by the parasitic impedance 300 may not attenuate much of the Bluetooth signals from the processing block 220. The Bluetooth signals may then generate voltages across the load impedance 350 of the mixers 214a and 214b. The resulting voltages generated across the load impedance 350 may be communicated to the differential inputs to the amplifier 216.

If the WLAN signals are also to be amplified by the amplifier 216, then the WLAN signals from the mixers 214a and 214b may combine with the Bluetooth signals from the mixers 224a and 224b to generate voltages across the load impedance 350. Accordingly, in various embodiments of the invention, the amplifier 216 may amplify either the Bluetooth signals or the WLAN signals, or both signals simultaneously for transmission via the antenna 218.

Various embodiments of the invention may be single ended, differential or a combination of single ended or differential implementations. For example, FIG. 2B and FIG. 2C illustrate exemplary single ended implementations, and FIG. 2C and FIG. 3 illustrate exemplary differential implementations.

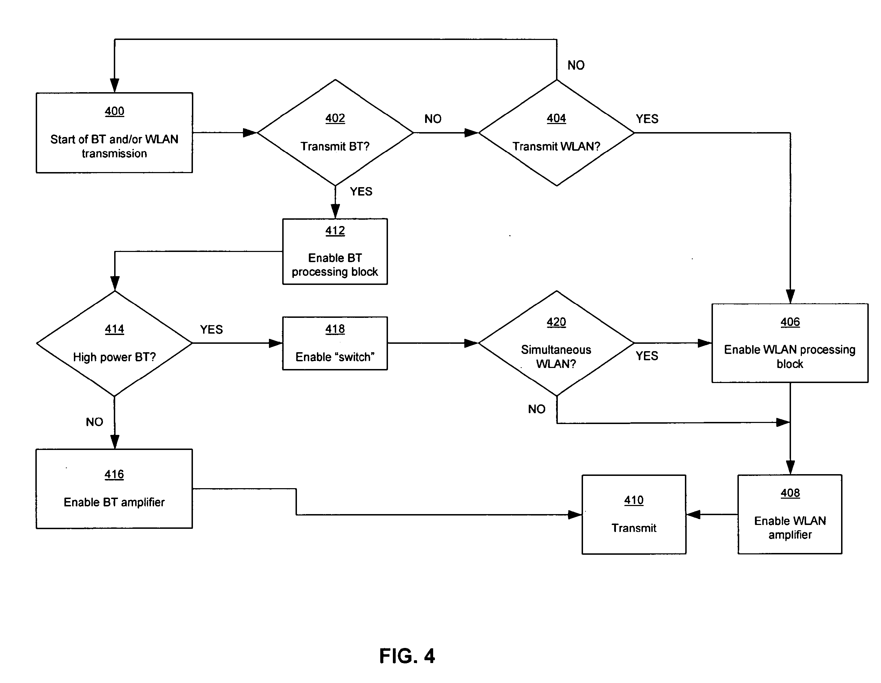

FIG. 4 is an exemplary flow diagram for sharing a high-power transmit path for a multi-protocol transceiver, in accordance with an embodiment of the invention. Referring to FIG. 4, there is shown steps 400 to 412. In step 400, the wireless terminal 120 may start a process for transmission. The transmission may be, for example, WLAN signals or Bluetooth signals. Various portions of the transmission circuitry may presently be disabled, or in reduced power state, which may include being powered down, when there is no transmission of signals from the wireless terminal 120. Accordingly, portions of the digital baseband transmitter 129 that processes digital signals for transmission may be disabled. The processing blocks 210 and 220, and the amplifiers 216 and 226 may also be disabled. Additionally, the switching circuit 230 may be in an open state.

In step 402, it may be determined whether the transmission is for Bluetooth signals. This may be determined, for example, by the processor 125. In instances when Bluetooth signals are not being transmitted, the next step may be step 404. Otherwise, the next step may be step 412. In step 404, it may be determined whether WLAN may be transmitted. If so, the next step may be 406. Otherwise, the next step may be step 400. In step 406, the processing block 210 may be enabled', or fully powered up, for transmission of WLAN signals. In step 408, the amplifier 216 may be enabled for transmission. In step 410, transmission of the WLAN signals may occur. After transmission of the WLAN signals and/or the Bluetooth signals is finished, appropriate circuitry that are no longer needed may be disabled to conserve power.

In step 402, the next step may be step 412 if Bluetooth signals are being transmitted. In step 412, the processing block 220 may be enabled for transmission of Bluetooth signals. In step 414, the determination may be made, for example, by the processor 125 whether high-power Bluetooth transmission may be needed. In instances where high power Bluetooth transmission is to be performed, the next step may be step 418. In instances where no high power Bluetooth transmission is to be performed, the next step may be step 416. In step 416, the amplifier 226 may be enabled. The next step may be step 410 where transmission of Bluetooth data via the antenna 228 may occur.

In step 414, if high-power Bluetooth transmission is to occur, the next step may be step 418. In step 418, the enable signal EN may be asserted to the switching circuit 230. Accordingly, the Bluetooth signals from the mixers 224a and 224b may be amplified by the amplifier 216. Since the amplifier 226 may not be needed for high-power Bluetooth transmission, the amplifier 226 may remain in a reduced power state. In step 420, it may be determined, for example, by the processor 125, whether WLAN signals may also be transmitted. Simultaneous transmission may occur if there is WLAN signals ready to be transmitted, and the bandwidth of the Bluetooth signals does not overlap with the bandwidth of the WLAN signals. If simultaneous transmission can occur, the next step may be step 406. Otherwise, the next step may be step 408.

Aspects of the system may also include an amplifier 216 that may be shared with a WLAN signal from the processing block 210 and a Bluetooth signal from the processing block 220. The amplifier 216 may amplify the WLAN signal and/or the Bluetooth signal; where the amplifier 216 may amplify simultaneously, both the WLAN signal and the Bluetooth signal. The Bluetooth signal may also be amplified by the amplifier 226, where the amplifier 216 may provide a higher gain than the amplifier 226. In instances where the amplifier 216 may be amplifying the Bluetooth signal, power may be reduced to the amplifier 226. The power may be controlled by circuitry and/or a processor, such as, for example, the digital baseband processor 129 and/or the processor 125. The Bluetooth signal may be communicated to the amplifier 216 via the RF switching circuit 230, where, in one embodiment of the invention, the RF switching circuit 230 may be a two-stage switching circuit. Notwithstanding, the RF switching circuit may comprise one or more switching circuits.

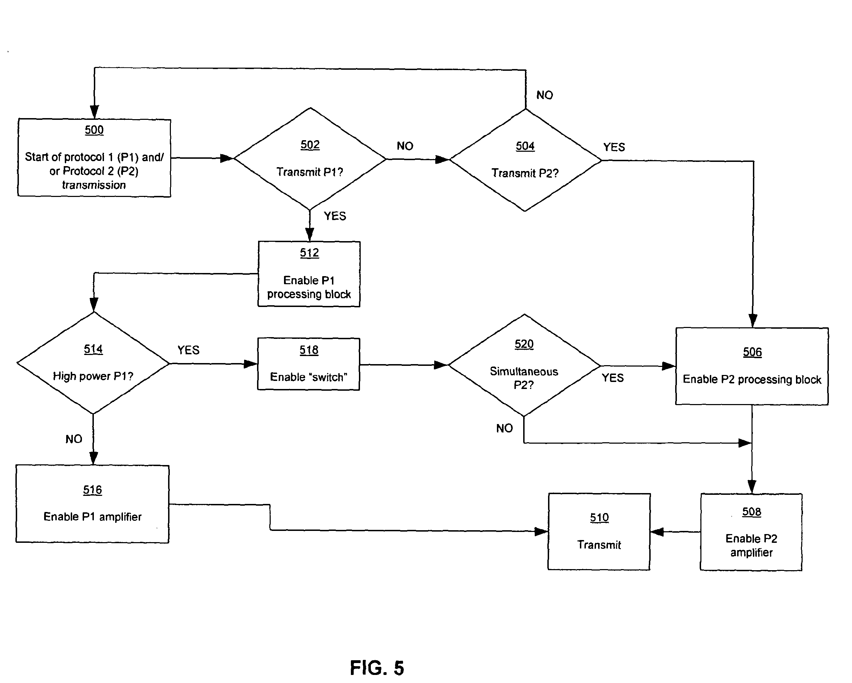

FIG. 5 is an exemplary flow diagram for sharing a high-power transmit path for a multi-protocol transceiver, in accordance with an embodiment of the invention. Referring to FIG. 5, there is shown steps 500 to 512. In step 500, the wireless terminal 120 may start a process for transmission. The transmission may be, for example, protocol 1 (P1) signals or protocol 2 (P2) signals. Various portions of the transmission circuitry may presently be disabled, or in reduced power state, which may include being powered down, When there is no transmission of signals from the wireless terminal 120. Accordingly, portions of the digital baseband transmitter 129 that processes digital signals for transmission may be disabled. The processing blocks 210 and 220, and the amplifiers 216 and 226 may also be disabled. Additionally, the switching circuit 230 may be in an open state.

In step 502, it may be determined whether the transmission is for P1 signals. This may be determined, for example, by the processor 125. In instances when P1 signals are not being transmitted, the next step may be step 504. Otherwise, the next step may be step 512. In step 504, it may be determined whether P2 signals may be transmitted. If so, the next step may be 506. Otherwise, the next step may be step 500. In step 506, the processing block 210 may be enabled, or fully powered up, for transmission of P2 signals. In step 508, the amplifier 216 may be enabled for transmission. In step 510, transmission of the P2 signals may occur. After transmission of the P2 signals and/or the P1 signals is finished, appropriate circuitry that are no longer needed may be disabled to conserve power.

In step 502, the next step may be step 512 if P1 signals are being transmitted. In step 512, the processing block 220 may be enabled for transmission of P1 signals. In step 514, the determination may be made, for example, by the processor 125 whether high-power P1 transmission may be needed. In instances where high power P1 transmission is to be performed, the next step may be step 518. in instances where no high power P1 transmission is to be performed, the next step may be step 516. In step 516, the amplifier 226 may be enabled. The next step may be step 510 where transmission of P1 data via the antenna 228 may occur.

In step 514, if high-power P1 transmission is to occur, the next step may be step 518. In step 518, the enable signal EN may be asserted to the switching circuit 230. Accordingly, the P1 signals from the mixers 224a and 224b may be amplified by the amplifier 216. Since the amplifier 226 may not be needed for high-power P1 transmission, the amplifier 226 may remain in a reduced power state. In step 520, it may be determined, for example, by the processor 125, whether P2 signals may also be transmitted. Simultaneous transmission may occur if there is P2 signals ready to be transmitted, and the bandwidth of the P1 signals does not overlap with the bandwidth of the P2 signals. If simultaneous transmission can occur, the next step may be step 506. Otherwise, the next step may be step 508.

Another embodiment of the invention may comprise sharing at least one power amplifier in a transmit chain of a transmitter by a plurality of transmit signals for a corresponding plurality of wireless protocols. A first of the plurality of wireless protocols comprises IEEE 802.11x protocol. A second of the plurality of wireless protocols may comprises Bluetooth protocol. One or more of the plurality of transmit signals may be amplified by one or more of the power amplifiers. Two or more of the plurality of transmit signals may be simultaneously amplified by one or more of the power amplifiers. At least one of power amplifiers in the transmit chain may be controlled so as to operate at optimal efficiency, such as to operate at maximum power efficiency. A bias current, gain, and/or linearity of one or more of the power amplifiers in the transmit chain may be controlled to as to provide optimal operation.

Aspects of the system may also include an amplifier 216 that may be shared with a WLAN signal from the processing block 210 and a Bluetooth signal from the processing block 220. The amplifier 216 may amplify the WLAN signal and/or the Bluetooth signal, where the amplifier 216 may amplify simultaneously, both the WLAN signal and the Bluetooth signal. The Bluetooth signal may also be amplified by the amplifier 226, where the amplifier 216 may provide a higher gain than the amplifier 226. In instances where the amplifier 216 may be amplifying the Bluetooth signal, power may be reduced to the amplifier 226. The power may be controlled by circuitry and/or a processor, such as, for example, the digital baseband processor 129 and/or the processor 125. The Bluetooth signal may be communicated to the amplifier 216 via the RF switching circuit 230, where, in one embodiment of the invention, the RF switching circuit 230 may be a two-stage switching circuit. Notwithstanding, the RF switching circuit may comprise one or more switching circuits.

Another embodiment of the invention may provide a machine-readable storage, having stored thereon, a computer program having at least one code section executable by a machine, thereby causing the machine to perform the steps as described above for a shared high-power transmit path for a multi-protocol transceiver.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention, In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing signals, the method comprising: sharing a first amplifier by a first wireless signal, modulated for a first wireless protocol and a second wireless signal modulated for a second wireless protocol.

2. The method according to claim 1, wherein said first wireless protocol is IEEE 802.11x protocol.

3. The method according to claim 1, wherein said second wireless protocol is Bluetooth protocol.

4. The method according to claim 1, comprising amplifying by said first amplifier, one or both of said first wireless signal and said second wireless signal.

5. A machine-readable storage having stored thereon, a computer program having at least one code section for processing signals, the at least one code section being executable by a machine for causing the machine to perform steps comprising: sharing a first amplifier by a first wireless signal modulated for a first wireless protocol and a second wireless signal modulated for a second wireless protocol.

6. A system for processing signals, the system comprising: a first amplifier that enables amplification of a first wireless signal modulated for a first wireless protocol and a second wireless signal modulated for a second wireless protocol.

7. The system according to claim 6, wherein said first wireless protocol is IEEE 802.11x protocol.

8. The system according to claim 6, wherein said second wireless protocol is Bluetooth protocol.

9. A method for processing signals, the method comprising: sharing at least one power amplifier in a transmit chain of a transmitter by a plurality of transmit signals for a corresponding plurality of wireless protocols.

10. A system for processing signals, the method comprising: sharing at least one power amplifier in a transmit chain of a transmitter by a plurality of transmit signals for a corresponding plurality of wireless protocols.
